# EUROPEAN PATENT APPLICATION

(11) **EP 4 137 288 A1**
(43) Date of publication of application: **22.02.2023**
(21) Application number: 21191624.2
(22) Date of filing: 17.08.2021
(51) Int. Cl.: B29C 33/30, B29B 11/16

(54) **MOLD ARRANGEMENT FOR PRODUCING A PREFORM ELEMENT OF A WIND TURBINE BLADE, AND METHOD FOR MANUFACTURING PREFORMS FOR A WIND TURBINE BLADE**

(71) Applicant: Siemens Gamesa Renewable Energy A/S, 7330 Brande (DK)
(72) Inventor: Nielsen, Anette Struve, 8464 Galten (DK); Nielsen, Mogens, 9220 Aalborg (DK)
(74) Representative: SGRE-Association

(57) **Abstract**

Mold arrangement for producing a preform element of a wind turbine blade, comprising a mold carrier (3) with a receiving section (4, 4a, 4b, 4c, 4d) having a three-dimensional receiving surface (7) for receiving at least one transferable and flexible plate-like mold element (8, 8a, 8b, 8c, 8d) adapted to receive preform building material (13) and arrangeable on the receiving surface (7), which flexible mold element (8, 8a, 8b, 8c, 8d) adapts to the three-dimensional geometry of the receiving surface (7) when positioned on the receiving surface (7).

## Description

The invention refers to a mold arrangement for producing a preform element of a wind turbine blade.

As commonlyknown, a wind turbine comprises among others several turbine blades attached to a hub. The blades interact with the wind making the hub rotate. To the hub a generator is coupled, which is driven by the rotation of the hub. The turbine blades of nowadays turbines have enormous dimensions in length and width. Their manufacturing is therefore difficult, as big parts need to be handled. One technology for producing such large blades uses preforms, which are preformed smaller blade parts used for building the respective blade shell. These prefabricated preforms are arranged and aligned according to the requested overall geometry of the blade and are finally connected, respectively embedded in fiber mats and resin etc., for manufacturing the final large blade or blade part.

Each preform, which usually has a slightly bent geometry with a length of for example 10 - 12 m and a width of for example 3 - 5 m, is prefabricated in a specific mold. The mold comprises a respective form part, arranged on a mold carrier, in which the preform building material like fiber mats and a binding material, e.g. a binding agent and, optionally, core elements, are arranged. These building elements are fixated on the respective mold part for example by applying a vacuum, which mold part has a defined geometry corresponding to the requested blade geometry and is therefore in most cases tray-like. For this fixation the preform building material is covered with for example a foil, so that the vacuum can be applied to the space between the foil in the mold part, in which the building material is arranged. Afterwards heat is supplied to the building material in order to activate or melt a binding material, be it solid or liquid, e.g. a locally arranged binding agent, for locally fixating the fiber mats and the core elements etc. by gluing them in the binder matrix provided by the binding material, e.g. the molten binding agent. After this heating operation the preform needs to be cooled to room temperature, whereafter it is sufficiently stable to be handled by a crane equipment or any other comparable handling or lifting means.

This way of producing the preforms is quite cumbersome. The molds used for producing the preforms are very complicated in their setup, especially as the heating and cooling system needs to be provided in every mold. This makes the mold very expensive, having in mind that a large number of separate molds is necessary, as usually at least twenty or more preforms are needed for producing a blade or blade part. Further, as the respective mold geometry is designed for a respective preform geometry, an extensive reworking of the mold is necessary, when the preform geometry shall be changed, entailing also the adaption of the heating and cooling equipment.

Further, as both the heating and cooling treatment is performed with the preform building material respectively the hot preform being arranged in the mold, the mold is occupied during these treatments. As the heating and cooling process take a remarkable time, the whole mold is blocked during these long-lasting procedures, the productivity is extremely low. This is even enhanced, as the mold cannot be preheated. The temperature treatment needs to start from room temperature, as all building elements need to be separately arranged in the mold before their vacuum fixation, whereafter the heating may start. Further, it is necessary to cool the hot preform down to room temperature in order to secure its stability for handling it with the lifting equipment. The time, during which the respective mold is occupied may even be extended, as sometimes a preform is not removed immediately after cooling but remains for a certain time in the mold, e.g. if no storing capacity is given.

Finally, after lifting the preform out of the mold, it is necessary to thoroughly clean the mold surface for the next manufacturing process. Still the mold cannot be used until the cleaning step is finished.

It is therefore an object of the invention to provide an improved mold arrangement for producing a preform element of a wind turbine blade.

To address the object, the invention proposes a mold arrangement for producing a preform element of a wind turbine blade, comprising a mold carrier with a receiving section, the receiving section having a three-dimensional receiving surface, for receiving a mold element and at least one transferable and flexible plate-like mold element adapted to receive preform building material and arrangeable on the receiving surface, which flexible mold element adapts to the three-dimensional geometry of the receiving surface when positioned on the receiving surface.

According to the invention, a specific new mold arrangement is provided. This mold arrangement comprises a mold carrier with a receiving section, the receiving section having a three-dimensional receiving surface. The receiving section is connected to the mold carrier. The three-dimensional receiving surface is the form or shape defining surface for the finally build preform element and may therefore have for example a tray-like or whatever geometry of the preform element that is requested. The mold arrangement further comprises a separate and transferable mold element, which can be arranged on and removed from the receiving section respectively the receiving surface. This mold element has a preform material receiving surface, on which the preform building material is arranged. The mold element itself is flexible and plate-like, and, as the preform building material is arranged on it, has a dimension which corresponds to the dimension of the final preform respectively is somehow larger. Due to its flexibility, the mold element is therefore adapted to follow the three-dimensional geometry of the receiving surface when it is positioned on the receiving surface. So, this flexible plate-like receiving element is for example a flat plate, which, when placed on the receiving surface, may change its geometry depending on the geometry of the receiving surface and therefore adapts to this surface shape.

The mold element is only used for arranging and fixating the building material on it. Right after fixating the building material, the transferrable mold element is removed from the mold carrier and is transferred to a separate heating means, for example a heating oven, in which the building material is heated respectively the binding material is molten for fixating respectively gluing the fiber material like fiber mats or the core elements etc. in the binder matrix. After this heat treatment the preform is cooled, for example to room temperature, by a cooling treatment, whereafter the final preform can be lifted from the transferrable mold element with a respective lifting equipment. During the whole manufacturing process the building material respectively the preform is arranged on the movable mold element and is therefore moved with the mold element between the respective manufacturing stations. As this mold element is plate-like, the whole construction setup of this mold element and the building elements respectively the preform itself is quite thin and therefore easy to handle. Right after the fixation of the building material, for example again by vacuum fixation, the mold element, which due to the vacuum fixation may have changed , can be removed from the mold carrier and transferred to the further processing stations.

This inventive mold arrangement shows a bundle of advantages. As the mold arrangement respectively the mold itself is solely used for arranging the building material on the mold element and for fixating the same on this mold element, no heating or cooling step is performed in the mold. Therefor the mold design is very simple, as no heating or cooling equipment needs to be provided at the mold. Further, as the mold carrier, which may be a frame-like carrier or the like is not exposed to any heat or cooling treatment, it will be dimensionally stable and last longer, as it is solely carrying the mold arrangement and the building material.

As only the packing is done in the mold and right after finishing this packing the mold element is removed, immediately afterwards a new flexible mold element may be arranged on the mold carrier. This allows to immediately start with the arrangement of new building material on the mold element of the same mold, which short time before was occupied. This allows to remarkably increase the throughput and the capacity. As usually a certain number of separate molds are provided an ongoing production may be realized, as it is only necessary to provide a respective number of separate flexible mold elements, which can be interchanged on the respective mold carrier.

As only the mold element with the fixated building material needs to be removed from the mold carrier for the further processing, no specific lifting means directly at the mold is necessary, as the plate-like mold element, which may be a quite thin element as it needs to be flexible, may simply be removed with the preformed material from the mold carrier for example by linear pushing or pulling action.

Further, as the building material respectively the preform is arranged on the movable flexible mold element throughout the whole manufacturing process, the handling is improved, as it is not necessary to get in contact with the preformed element at any time until it is finally produced. Further, as the mold element together with the vacuum foil provides a perfect protection of the preform, it is possible to store the mold element with the preform in stock after the cooling process.

As mentioned, the mold element is a multi-functional element. It is used as the receiving element which receives the building material and which defines the shape or form in which the building material is arranged as it is flexible and adapts to the basic form or shape defining surface, i.e. the receiving surface of the receiving section. It is further a fixation element, as together with the vacuum foil it is used for fixating the building material. Further, it is used as a transport element, as it is removed and transported from the mold carrier through the following manufacturing stations, always securing that the fixated building material or the preform remains in shape.

As mentioned, a central feature of mold arrangement is the plate-like mold element, which is flexible and therefore able to adapt to the three-dimensional geometry of the receiving surface. It easily changes its two-dimensional shape to the three-dimensional shape of the receiving surface and thereby provides the respective surface, on which the preform building material is arranged. The mold carrier itself comprises a respective stiff and stable receiving section with a defined and specifically shaped receiving surface, which receiving section may for example be realized by a specific tray-like mold carrier plate arranged on the mold carrier or the like. In this receiving section respectively for example tray-like recess with the receiving surface the flexible plate is arranged, so that the flexible plate follows the form of this receptacle, i.e. becomes itself tray-like. This flexible plate provides the mold surface, on which the preform material is then arranged. After the building material is then finally fixated on this flexible mold element, i.e. by the vacuum foil and the applied vacuum, this whole setup comprising the three-dimensionally formed flexible plate and the building material fixated by the vacuum fixation is stiff enough to maintain its bent or tray-like form or shape when it is removed from the mold carrier element respectively the receiving surface.

As mentioned, the receiving surface is three-dimensionally shaped and is the overall form or shape designing means which defines the preform shape. The resulting preform elements mostly will have a convex or concave shape or cross section, it is for example slightly bent around its longitudinal axis. Therefore, the three-dimensional receiving surface may also be, at least partly, a convex or a concave surface, e.g. bent in only one direction respectively around its longitudinal axis. The three-dimensional receiving surface may also be, at least partly, a flat surface. Other three-dimensional geometries may be used. For example, also a slight bending around the transverse axis is possible, wherein the flexible mold element is always adapted to follow the shape of the receiving surface.

The flexible mold element itself may be made of various materials, as long as the mold element is flexible enough to adapt its form to the receiving surface. The flexible mold element may for example be made of a polymer, which is sufficiently temperature-stable in view of the heat treatment, which is usually performed by heating the preformed building material to a temperature of for example something between 60 - 90°C. The chosen polymer needs to be flexible enough, when produced to the plate-like preformed mold element, which is remarkable thin. An example for such a polymer, which may be used, is polypropylene, also other polymers may be used as mentioned.

In an alternative, the flexible mold element may comprise a metal or be made of a metal, e.g. be a sheet metal element. The mold element may for example comprise aluminum which is a light weight material and, when used for producing such a large thin plate, the mold element would be sufficiently flexible. Also a steel plate may be used. Further, any other suitable metals or metal alloys may be used. In addition, the flexible mold element may be one single element or be comprised of several individual elements joined together.

In an embodiment of the invention, the flexible mold element comprises a polymer coating, at least on the side on which the preformed building material is received. This allows for adapting the physical, chemical and/or mechanical properties of the surface on which the preformed building material is arranged by using a specific polymer coating. For example, a polymer coating may be used which ascertains that the binding material does not stick or adhere to the polymer coating, so that the final preformed element may easily be removed from the flexible mold element.

The flexible mold element preferably has a thickness of 0,1 - 10 mm, preferably of 0,5 - 5 mm. It is therefore preferably a quite thin plate. Depending on the material, a very small thickness is possible. For example, a metal plate may be very thin, e.g. between 0,1 - 2 mm, as the metal material itself is very stable. A polymer plate may have a larger thickness. No matter what the material and thickness of the flexible mold element is, its overall dimension may be e.g. 1 - 5 m, more preferred, 3 - 5 m, in width and in the range of 1 - 15 m in length
corresponding to the dimensions of the preformed element to be built, but it preferably extends in the longitudinal and transverse direction over the dimension of the preformed element to be built, so that for example a vacuum foil may easily be arranged and cover the building material and extends on the flexible mold element. The above mentioned exemplary ranges of a length and a width of the flexible mold element enable manufacture of preformed elements with e.g. 1 - 5 m length, e.g. for use in the root area of a wind turbine blade or up to 12 - 15 m length for other preformed elements, e.g. those to be used further outboard in such a blade.

As mentioned, the mold element adapts to the three-dimensional shape of the receiving surface due to its flexibility. In this regard the flexible plate or plate-like element may be adapted to the three-dimensional receiving surface by gravity only. In this embodiment, the flexibility of the plate-like mold element is such that it completely adapts and connects to the receiving surface over the whole connection area only by gravity. The form adaption is finalized simply by arranging the flexible mold element on the receiving surface, no additional form or shape adaption is necessary.

In an alternative it is possible that a vacuum means is provided for fixating the flexible mold element on the receiving surface and/or adapting it to this surface by applying a vacuum. In this embodiment a vacuum is applied underneath the flexible mold element for sucking it finally against the receiving surface. Due to its flexibility, the mold element respectively the plate follows the receiving surface geometry to a remarkable extend, but not necessarily completely, so that it may not be in contact with the receiving surface over the whole overlapping area. To finally adapt its shape, a vacuum is applied, which sucks the plate-like mold element, firmly against the receiving surface finalizing the shape adaption. It then completely follows the shape of the receiving surface. The mold respectively the mold arrangement only needs to be provided with the respective vacuum generating means. Right after vacuum-fixating the plate-like mold element, the building material may be arranged on this mold element and be vacuum-fixated after the vacuum foil is placed in order to build the stiff setup.

For providing this vacuum-fixation, a vacuum means as mentioned before is necessary. To realize this, the receiving section and thus the receiving surface may be perforated and a sealing cover may be arranged underneath the receiving section and coupled to a vacuum pump adapted to generate the vacuum, e.g. through the perforation. The vacuum means is adapted to create a vacuum, preferably throughout the entire area on which the flexible mold element rests on the receiving surface. Therefor the receiving surface, respectively the receiving section, may be perforated over the whole connection area. To ascertain that the vacuum can be applied over this large area, a sealing cover is arranged underneath the receiving section and attached to it and sealed, so that a vacuum chamber is realized, which vacuum chamber is coupled to the vacuum pump. When the vacuum pump is switched on, this vacuum chamber is evacuated through the perforation and also the space between the mold element and the receiving surface, so that the mold element is sucked towards the receiving surface.

In order to provide a good sealing of the flexible mold element towards the receiving surface, respective sealing elements may be arranged, e.g. at the sides of the mold element adapted to seal towards the receiving surface. The mold element, which usually has a rectangular shape, is provided with respective sealing means like a flexible sealing lip or a sealing ring arranged at the sides of the plate-like element and extending at all longitudinal and transverse edges, so that when placed on the receiving surface a tight sealing is realized and a sufficiently strong vacuum may be applied. The sealing means is permanently fixed to the plate-like element but may be changed when needed. In another embodiment, the sealing means is arranged on the receiving surface of the receiving section.

As mentioned before, preferably a vacuum foil is provided for covering the preform building material arranged on the flexible mold element which in turn is arranged on the receiving surface, which vacuum foil is sucked towards the flexible mold element by applying a vacuum. This vacuum fixation fixates the arranged preform building material to the flexible mold element, wherein the fiber mats may comprise e.g. glass fiber or carbon fiber mats, while also both of these types of mats may be used together, wherein furthermore a binding material, usually in the form of a binding powder, a granulate or the like, which binding material is usually locally applied below, between or above the respective fiber mats, and further, optionally, the core element or several core elements, e.g. core elements made of wood like balsa wood, or core elements made of a polymer foam or the like in their defined arrangement on the mold element. The vacuum cover in form of a vacuum foil is easily placed over the building material and overlaps with the mold element. By applying a vacuum between the mold element and the vacuum cover, the space in between, in which the building material is arranged, is evacuated and the vacuum cover is firmly sucked towards the mold element, thereby fixating the building material in place.

As it is possible to apply two vacuums, i.e. a first vacuum for fixating and sucking the flexible mold element plate towards the receiving surface, and a second vacuum for sucking the vacuum foil against the mold element for fixating the building material, it is possible to provide separate vacuum means, each separately applying the respective vacuum. Each vacuum means comprises a respective vacuum pump. In an alternative it is possible that the vacuum means for sucking the mold element towards the receiving surface is adapted to also apply the vacuum for fixating the vacuum foil. Here only one vacuum pump is used, which is coupled via respective valves etc. for switching the vacuum to either the first space to be evacuated, i.e. for sucking the mold element towards the receiving surface, or for evacuating the second space for sucking the vacuum foil towards the mold element. Certainly, after the building material is fixated, it is possible to decouple the mold element from the vacuum means when the mold element is removed from the mold carrier.

Finally, the mold arrangement may comprise more than one receiving sections, wherein each receiving section is removably arrangeable at a carrier structure of the mold carrier. According to this embodiment various receiving sections having differently shaped receiving surfaces may be attached to one common mold carrier. This allows to easily adapt the mold to another specific preform setup by simply changing the respective receiving section. This receiving section may be realized in the form of a plate made of metal, polymer or wood, which has a respectively shaped receiving section, for example a tray-like recess. It is made of a respective metal, polymer or wooden plate, so that it is not too heavy but easy to handle. It may be arranged at the mold carrier, which is provided with respective carrying and fixating means adapted to receive and carry respectively firmly fixate the transferable receiving section. This embodiment allows to use the mold carrier as a multi-functional carrier, so that the mold itself may easily be form adapted, when a new preform element needs to be built.

Further the invention refers to a method for manufacturing preforms for a wind turbine blade, using a mold arrangement as mentioned above, with the steps:
- Arranging a transferable plate-like flexible mold element on the receiving section of the mold carrier and adapting the flexible mold element to the form of the receiving surface,
- Arranging a preform building material on the mold element,
- Fixating the preform building material on the mold element,
- Removing the mold element with the fixated preform building material from the mold carrier and transferring it to a heating means,
- Heating the preform building material for producing the preform,
- Removing the mold element with the preform from the heating means and cooling the preform.

According to this inventive method, a mold arrangement as described above is used, comprising the flexible plate-like mold element, which is arranged on the receiving surface and which is form adapted to the three-dimensional shape of the receiving surface. After this form adaption the building material is arranged and fixated on the mold element, whereafter the covered mold element is removed and transferred to a heating means like an oven, which, as the heating is solely performed in this oven, may be preheated to the respective needed temperature. There the binding material, e.g. a binding agent, is melted, so that it wets and embeds the preformed building material, whereafter it is cooled in order to solidify the binding material to a stiff binding matrix firmly fixating the building material.

It is obvious, that the mold or mold arrangement is solely used for arranging the preform building material and for fixating it on the flexible plate-like mold element. Right after this, the flexible mold element is removed. Another new and clean flexible mold element may again be arranged on the receiving surface, so that new building material may be arranged. The mold therefore may constantly be used, as the heating and cooling is performed somewhere else.

The flexible plate-like element may either be fixated to the three-dimensional or tray-like receiving surface by gravity, so that it completely adapts and connects to the receiving surface over the whole overlapping area or, in an alternative, it may also be fixated by applying a vacuum, which firmly sucks the mold element plate against the receiving surface.

As mentioned, the mold element with the fixated preformed building material may be quickly removed from the mold carrier. It is possible that the or several mold elements with the fixated preformed building material is or are transferred from the mold carrier to a, preferably rack-like, mold element transport means and either stored in the transport means until it is transported with the transport means to the heating means or directly transported with the transport means to the heating means. The mold element with the fixated preformed building material may therefore also be used as a storage means, so that this arrangement may be stored, when it is not immediately heat treated. But it may also be immediately moved to the heating means like the oven for further processing. This movement from the mold carrier to either the storage carrier or to the heating means may preferably be done by a transport means like a rack, which is adapted to receive at least one, preferably more covered mold elements. This transport means or rack may be arranged in respective guide rails and may automatically move.

For simple moving the covered mold element from the receiving section respectively the receiving surface, it may be possible to provide respective guiding means at the receiving section allowing to easily push the covered mold element from the receiving section into a respective receptacle of the transport means. This guiding means may for example be a kind of air cushion, which is realized by providing in air pressure underneath the plate-like mold element, so that the mold element slides on this air cushion and may simply be pushed. This is easily realizable, when a vacuum means is provided for sucking the mold element towards the receiving surface for adapting its shape and fixing it. The vacuum pump simply needs to be switched in order to press air through the perforation under the mold element, so that it may slide on this this air cushion. In an alternative, also rollers or the like, which are movable into and out of the receiving surface, may be used. For adapting and fixating the mold element on the receiving section, these rollers are moved into the receiving surface so that the mold element may contact the receiving surface over the whole area. For removing the mold element, the roller elements may be moved out of the receiving surface for example for some millimeters, so that the mold element is slightly lifted and may be pushed on the rollers from the receiving section. This roller movement may for example be realized by a pneumatic action or by respective pneumatic cylinders or the like.

If the transport means is adapted to store more than one mold elements, the transport means may move from a first mold carrier for receiving a first mold element to one or more further mold carriers for receiving one or more further mold elements. Through the transport means respectively the rack collects the several covered mold elements by simply moving from one mold carrier to the other until it is fully loaded, whereafter it may either move to the storage area or to the heating means.

The transport means itself, being loaded with one or more mold elements, may either move into the heating means. So, no further transfer of the covered mold elements from the transport means to respective receiving means in the oven is necessary. The whole rack is moved into the oven. In an alternative one or more mold elements are moved from the transport means into the heating means. Here the transport means is unloaded, while the oven is loaded with the separate mold elements.

Finally after the heating the one or more mold elements are removed from the heating means and cooled in ambient air, or are moved into a cooling means. When the heating process is finished, the cooling step follows. This may be done by simply moving the mold elements out of the heating means respectively the oven and cooling them in ambient air or at ambient temperature. Either the transport means with the mold elements, which was moved into the oven, is moved out of the oven into the ambient air, or the separate heated mold elements are moved out of the oven onto a separate transport means. In an alternative, it is possible to move the heated mold elements into a respective cooling means like a cooling chamber, where for example an air cooling is realized. Again the loaded transport means may be moved directly from the oven to the cooling chamber, or the heated mold elements may separately but directly be moved from the heating oven into the cooling chamber, or a separate transport means is switched between the oven and the cooling chamber for transferring the mold elements. After the final cooling step, the cooled mold elements are removed from the cooling means and are either transported by the transport means or by another transport means to a storage area where the mold elements with the finished preformed elements are stored, or the finished preforms are removed from the mold elements, which are then again circulated back to the mold arrangements for further processing, while the preforms are stored, or are directly used for building a blade or blade part.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: is a principle illustration of an inventive mold arrangement of a first embodiment,
- Fig. 2: is a principle illustration of the mold arrangement of Fig. 1, wherein the mold element with the fixed building material is loaded from the mold carrier to a transport means,
- Fig. 3: is a principle illustration of an inventive mold arrangement of a second embodiment, wherein the mold element is not yet arranged on the receiving surface,
- Fig. 4: is a principle illustration of the mold arrangement of Fig. 3, wherein the mold element is gravity adapted to the receiving surface, and
- Fig. 5: is a principle illustration of a complete manufacturing arrangement.

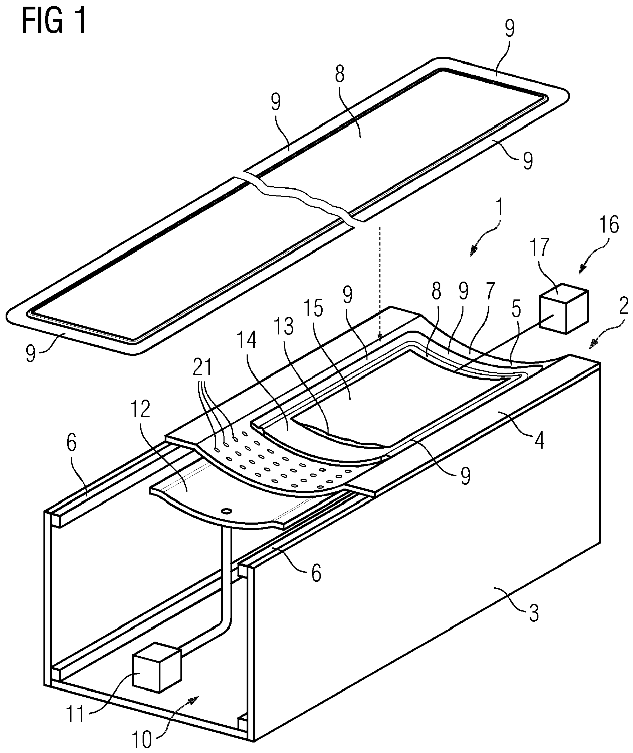

Fig. 1 shows a principle illustration of a mold arrangement 1 for manufacturing a preform for a wind turbine blade. The mold arrangement 1 comprises a mold 2 with a mold carrier 3, to which in this embodiment removable or interchangeable mold receiving section 4 in form of a plate having a tray-like receiving receptacle 5 is attached. The mold carrier 3 comprises respective receiving elements 6 like longitudinal rails or beams or the like, on which the receiving section 4 rests. It may be fixed thereto by respective fixation means, which may be easily opened when the receiving section 4 shall be changed, for example some screws or brackets or the like.

The receiving section 4, as mentioned, is provided with a respective recess 5 having a receiving surface 7. The shape of the recess 5 respectively of the receiving surface 7 defines the final shape which the preform shall have.

The preform building material is not arranged directly on the receiving surface 7, but on a flexible plate-like mold element 8, which is arranged on the receiving surface 7. In Fig. 1 a mold element 8 is shown which is not arranged on the three-dimensionally shaped, here tray-like receiving surface 7, while for the sake of illustration another mold element 8 is already arranged on the receiving surface 7.

The mold element 8 has a rectangular basic shape, as shown by the mold element 8 not arranged on the receiving surface 7 and in the basic shape is a two-dimensional thin plate made either of a polymer like polypropylene or of metal like aluminum. The thickness is between 0,1 - 10 mm, preferably between 0,5 - 5 mm. It is therefore a very thin but flexible plate, which may, due to its flexibility, adapt to the tray-like three-dimensional geometry of the receiving surface 7.

In the shown embodiment, sealing means 9 like polymer or rubber sealing lips are arranged on all four sides of the mold element 8 respectively the plate, which sealing means 9 are in contact with the receiving section 4 respectively the receiving surface 7 as shown, when the mold element 8 is arranged on the receiving surface 7. It tightly seals the space between the mold element 8 and the receiving surface 7, so that a vacuum can be applied underneath the mold element 8, which firmly sucks the mold element 8 against the receiving surface 7, so that it exactly follows the geometry of the receiving surface 7, in case it does not adapt completely to this geometry solely by the gravity and its flexibility. For applying the vacuum, a vacuum means 10 is provided, comprising a vacuum pump 11 and a sealing cover 12 which is arranged at the bottom side of the receiving section 4 and which seals a space underneath the receiving section 4. The receiving section 4 and the receiving surface 7 itself is perforated, e.g. by a number of holes 21. When the vacuum pump 11 is in operation it evacuates the space defined underneath the receiving section 4 and through the holes 21 or similar also the space underneath the mold element 8, so that it is firmly sucked against the receiving surface 7.

When the mold element 8 is completely form adapted and vacuum fixed the preform building material 13 is arranged on the surface 14 of the mold element 8. The building material 13 comprises fibre mats like glass or carbon fibre mats, optionally one or more core elements made of balsa wood or a polymer foam, and a locally applied binding material, e.g. a binding agent like a powder or a granulate, which shall be melted in a later heating step. All these elements, especially the fibre mats, adapt to the tray-like geometry of the surface 14 of the mold element 8. After they are correctly and thoroughly arranged, a vacuum foil 15 is applied, which completely covers the building material 13 and overlaps onto the surface 14. By means of a further vacuum means 16, which is here only shown in principle and which comprises a further vacuum pump 17, a vacuum may be applied underneath this vacuum foil 15, which is sucked towards the building material 13 and the surface 14, so that the building material in its composition or build-up is completely vacuum fixed. A whole transferable unit comprising the mold element 8, the building material 13 and the vacuum foil 15 is built, which is sufficiently stable, so that the shape of the arrangement is maintained, which means that the mold element 8 maintains its slightly tray-like shape even when the vacuum, which fixates it to or presses it against the receiving section 4, is no longer applied and when the mold element 8 is removed together with the building material 13 and the vacuum foil 15. The vacuum applied by the second vacuum means 16 is maintained, even during the transport etc., so that by means of this vacuum the three-dimensional tray-like shape is permanently maintained.

Just for illustration purpose the respective items are partially cut, meaning that the mold 2 is certainly much longer, while also all other items arranged on the mold carrier 3 like the receiving section 4 and the sealing cover 12, and certainly also the mold element 8 with the building material 13 and the vacuum foil 15 are much longer.

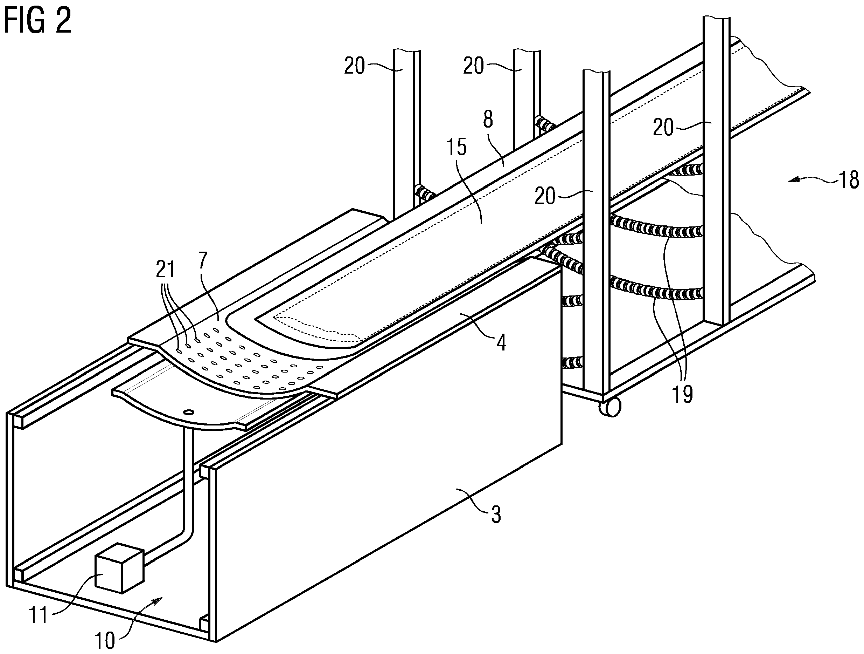

Fig. 2 shows the situation, where the mold element 8 is loaded with the building material 13 and the vacuum foil 15 and is ready to be transferred. As mentioned, for this transfer the vacuum provided by the first vacuum means 10 is no longer applied and the mold element 8 is no longer sucked against the receiving section. It may now be moved onto a transport means 18 here in the form of a movable rack, which comprises several receiving elements 19 arranged in various heights, which receiving elements 19 are for example movable in a vertical direction along the respective vertical arms 20 of the transport means 18 in order to bring them in a respective vertical position for the transfer and to allow several mold elements to be loaded. The receiving elements 19 are for example provided with a number of rollers, so that the mold element 9 may be pushed on them and may easily be movable also on these rollers of the receiving elements 19.

For transferring the loaded mold element 8 from the receiving section 4 onto the transport means 18, it is possible to create an air cushion underneath the mold element 8 simply by switching the vacuum pump 11 in a state where it presses air into this space which was previously evacuated, so that through the holes 21 air is blown under the mold element 8.

The mold element 8 hovers on this air cushion and can easily be pushed along the receiving surface 7 and from the receiving surface 7 onto the receiving elements 19 of the transport means 18.

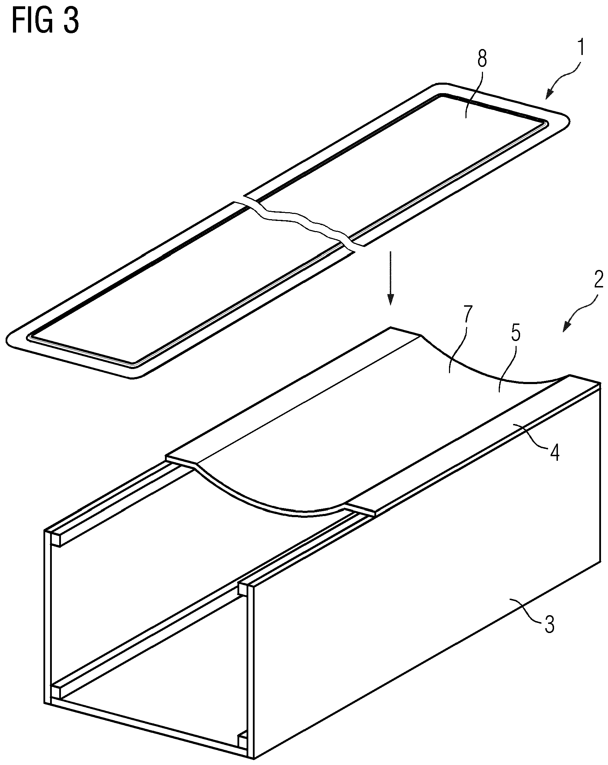

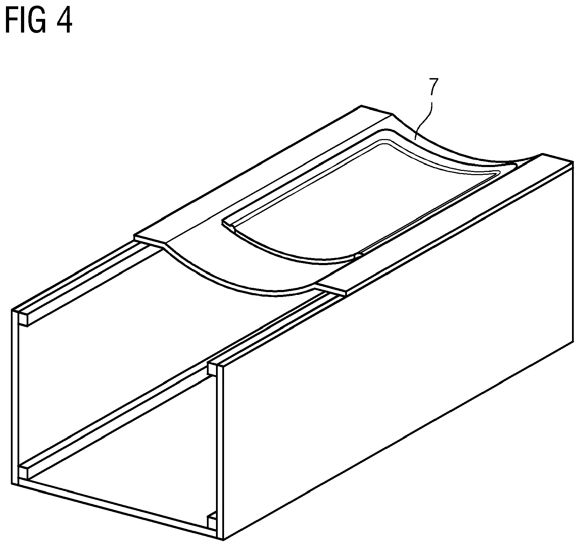

Fig. 3 and 4 show a second embodiment of a mold arrangement 1, wherein the same reference numbers are used for the same items.

Also, in this embodiment the mold arrangement 1 comprises a mold 2 with a mold carrier 3, on which a respective and preferably interchangeable receiving section 4 is arranged.

The receiving section 4 is provided with a tray-like recess 5 having a receiving surface 7, on which, again, a flexible plate-like receiving element 8 shall be arranged. In this embodiment, the mold element 8 is a simple flexible plate made of polymer or sheet metal, which adapts to the shape of the receiving surface 7 solely by gravity. It is just placed on the receiving surface 7, as shown in Fig. 3 by the arrow, and completely adapts perfectly to the tray-like shape. No first vacuum means 10, like in the first embodiment, is necessary, only the second vacuum means 16 for vacuum fixating the building material 13 is needed.

As, compared to the first embodiment, no air cushion or the like may be provided, in this embodiment for example retractable rollers or the like, which are arranged at the receiving section 4, may be provided, which may be moved between a retracted position, in which they are flush integrated in the receiving surface 7, and a not retracted position, in which they slightly extend over the receiving surface 7 and carry the mold element 8, may be provided. The mold element 8 then rests on these rollers and may simply be pushed along the receiving section 4 for transferring it to the transfer means 18.

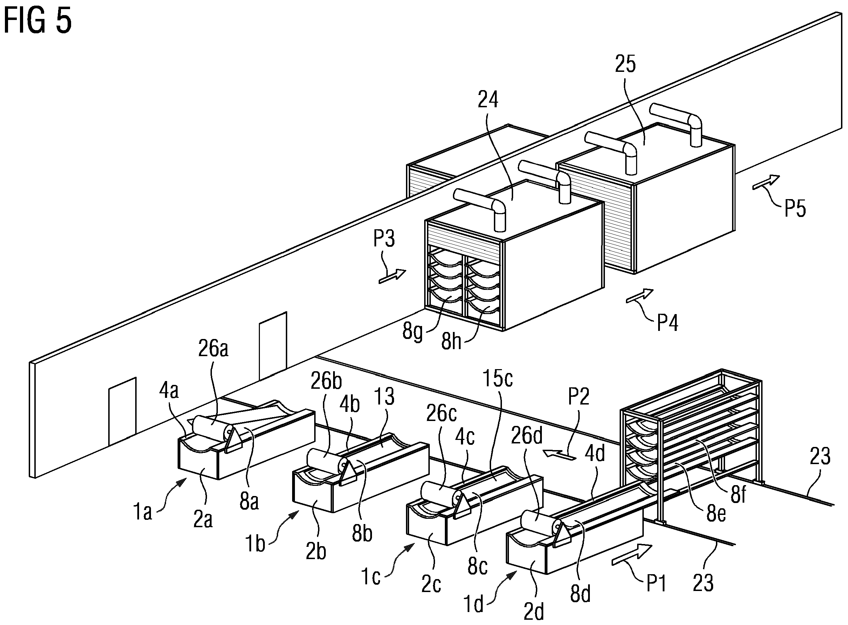

Fig. 5 shows an inventive manufacturing arrangement 22, for producing preform elements for turbine blades. It shows in this example four mold arrangements 1a, 1b, 1c, 1d which are arranged side by side. Each mold arrangement 1a, 1b, 1c comprises a mold 2a, 2b, 2c, 2d with a fixed receiving section 4a, 4b, 4c, 4d. On the receiving section 4a a mold element 8a is just loaded, while on the receiving section 4b the building material is arranged. On the receiving section 4c a vacuum foil 15c is arranged for the vacuum fixation. The mold element 8d is completely loaded and ready to be transferred to the transport means 18, which in this embodiment is guided on respective rails 23. In the transport means 18, here a rack, mold elements 8e and 8f are already loaded and lifted, so that the mold element 8d may be pushed onto the respective receiving elements 19 of the transport means 18. This is shown by the arrow P1. The transport means 18 moves along the rails 23 as shown by the arrow P2, so that all molds 1a, 1b, 1c and 1d may be served.

When the transport means 18 is fully loaded it is positioned in front of a heating means 24, here a heating oven, into which the respective loaded mold elements are separately loaded, as shown with the mold carriers 8g and 8h already inserted in the heating means 24 respectively the oven. This loading process is shown by the arrow P3.

When the transport means 18 is unloaded, it may return again and again start collecting loaded mold elements, as each mold 2a, 2b, 2c, 2d may immediately again be equipped with a separate flexible plate-like mold element 8a, 8b, 8c, 8d, right after a previously loaded mold element is removed onto the transport means 18.

After the heating step is performed, in which the binding material melts and embeds and firmly fixates the building material like the fiber mats etc., the heated mold elements are transferred to a cooling means 25 like an air cooler or the like, which is shown by the arrow P4. In this cooling means 25 the preforms are cooled to ambient temperature and are moved out of the cooling means 25 as shown by the arrow P5. The mold elements are then unloaded, meaning that the cooled preforms, which are now stable in their shape, may be removed after the vacuum and the vacuum foil 15 is removed. The fixated and three-dimensionally shaped preforms may then either be stored in a storage area or may immediately be processed to a blade or blade part. The mold elements 8, which again return to their two-dimensional shape, may then simply be cleaned and recirculated to be again used on a respective mold.

Although in Fig. 5 each mold arrangement 1a, 1b, 1c, 1d is equipped with a separate fiber mat supply 26a, 26b, 26c, 26d, which allows to unwind the fiber mats from a large role and extend them in a longitudinal direction onto the respective mold element 8a, 8b, 8c, 8d, it is also possible to arrange the building material supplies 26a, 26b, 26c, 26d at the longitudinal side of the respective mold 2a, 2b, 2c, 2d and move them along the side, so that the fiber mat material can also be arranged in chordwise direction. It is also certainly possible to have the building material supply 26a, 26b, 26c, 26d changeable from the front side to the longitudinal sides in order to have as well as longitudinal and chordwise arranged mats.

Although the present invention has been described in detail with reference to the preferred embodiment, the present invention is not limited by the disclosed examples from which the skilled person is able to derive other variations without departing from the scope of the invention.

## Claims

1. Mold arrangement for producing a preform element of a wind turbine blade, comprising a mold carrier (3) with a receiving section (4, 4a, 4b, 4c, 4d) having a three-dimensional receiving surface (7) for receiving a mold element (8, 8a, 8b, 8c, 8d) and at least one transferable and flexible plate-like mold element (8, 8a, 8b, 8c, 8d) adapted to receive preform building material (13) and arrangeable on the receiving surface (7), which flexible mold element (8, 8a, 8b, 8c, 8d) adapts to the three-dimensional geometry of the receiving surface (7) when positioned on the receiving surface (7).

2. Mold arrangement according to claim 1, **characterized in that** the three-dimensional receiving surface (7) is at least partly a convex and/or a concave.

3. Mold arrangement according to claim 1 or 2, **characterized in that** the flexible mold element (8, 8a, 8b, 8c, 8d) is made of a polymer or metal.

4. Mold arrangement according to one of claims 1 to 3, **characterized in that** the flexible mold element (8, 8a, 8b, 8c, 8d) has a polymer coating at least on a side on which the preform building material is received.

5. Mold arrangement according to claim 3 or 4, **characterized in that** the polymer is polypropylene and that the metal is aluminum.

6. Mold arrangement according to one of the preceding claims, **characterized in that** the flexible mold element (8, 8a, 8b, 8c, 8d) has a thickness of 0,1 - 10 mm, preferably of 0,5 - 5 mm.

7. Mold arrangement according to one of the preceding claims, **characterized in that** the flexible mold element (8, 8a, 8b, 8c, 8d) is adapted to adapt to the three-dimensional receiving surface (7) by gravity only.

8. Mold arrangement according to one of the preceding claims, **characterized in that** a vacuum means (10) is provided for fixating the flexible mold element (8, 8a, 8b, 8c, 8d) to the receiving surface by applying vacuum.

9. Mold arrangement according to claim 8, **characterized in that** the receiving section (4, 4a, 4b, 4c, 4d), preferably the receiving surface (7), is perforated, wherein a sealing cover (12) is arranged underneath the receiving section (4, 4a, 4b, 4c, 4d) and coupled to a vacuum pump (11) adapted to generate the vacuum through the perforation.

10. Mold arrangement according to claim 8 or 9, **characterized in that** sealing elements (9) are arranged at the sides of the mold element (8, 8a, 8b, 8c, 8d) adapted to seal towards the receiving surface (7).

11. Mold arrangement according to one of the preceding claims, **characterized in that** a vacuum foil (15) is provided for covering the preform building material (13) arranged on the flexible mold element (8, 8a, 8b, 8c, 8d) arranged on the receiving surface (7), which vacuum foil (15) is sucked towards the flexible mold element (8, 8a, 8b, 8c, 8d) by applying a vacuum.

12. Mold arrangement according to claim 11, or according to claim 11 and one of the claims 8 to 10, **characterized in that** a separate vacuum means (16) is provided for sucking the vacuum foil (15) towards the mold element (8, 8a, 8b, 8c, 8d), or that the vacuum means for sucking the mold element (8, 8a, 8b, 8c, 8d) towards the receiving surface (7) is adapted to apply the vacuum for fixating the vacuum foil (15).

13. Mold arrangement according to one of the preceding claims, **characterized in that** it comprises more than one receiving section (4, 4a, 4b, 4c, 4d), wherein each receiving section (4, 4a, 4b, 4c, 4d) is removably arrangeable at a carrier structure of the mold carrier (3) .

14. Method for manufacturing preforms for a wind turbine blade, using a mold arrangement according to one of the preceding claims, with the steps:
- Arranging a transferable plate-like flexible mold element (8, 8a, 8b, 8c, 8d) on the receiving section (4, 4a, 4b, 4c, 4d) of the mold carrier (3) and adapting the flexible mold element (8, 8a, 8b, 8c, 8d) to the form of the receiving surface (7),
- Arranging a preform building material (13) on the mold element (8, 8a, 8b, 8c, 8d),
- Fixating the preform building material (13) on the mold element (8, 8a, 8b, 8c, 8d),
- Removing the mold element (8, 8a, 8b, 8c, 8d)3) with the fixated preform building material (13) from the mold carrier (3) and transferring it into a heating means (24),
- Heating the preform building material (13) for producing the preform,
- Removing the mold element (8, 8a, 8b, 8c, 8d) with the preform from the heating means (24) and cooling the preform.

15. Method according to claim 14, **characterized in that** the flexible mold element (8, 8a, 8b, 8c, 8d) is fixated on the receiving surface (7) by gravity or by applying a vacuum.

16. Method according to claim 14 or 15, **characterized in that** the or several mold elements (8, 8a, 8b, 8c, 8d) with the fixated preform building material (13) is or are transferred from the mold carrier (3) to a, preferably rack-like, mold transport means (18) and either stored in the transport means (18) until it is transported with the transport means to the heating means (24) or directly transported with the transport means (18) to the heating means (24).

17. Method according to claim 16, **characterized in that** the transport means (18) moves from a first mold carrier (3) for receiving a first mold element (8a) to one or more further mold carriers (3) for receiving one or more further mold elements (8b, 8c, 8d).

18. Method according to claims 17, **characterized in that** the transport means (18) with one or more mold elements (8, 8a, 8b, 8c, 8d) moves into the heating means (24), or that one or more mold elements (8, 8a, 8b, 8c, 8d) are moved from the transport means (18) into the heating means (24).

19. Method according to one of the claims 14 to 18, **characterized in that** after the heating the one or more mold elements (8, 8a, 8b, 8c, 8d) are removed from the heating means (24) and cooled in ambient air or at ambient temperature, or are moved into a cooling means (25).
